# EUROPEAN PATENT SPECIFICATION

(11) **EP 2 120 420 B1**
(45) Date of publication and mention of the grant of the patent: **03.08.2016**
(21) Application number: 08009097.0
(22) Date of filing: 16.05.2008
(51) Int. Cl.: H04L 29/12, H04L 29/08

(54) **Method, device and communication system for managing adress data**
Verfahren, Vorrichtung und Kommunikationssystem zum Verwalten von Adressendaten
Procédé, dispositif et système de communication pour la gestion de données d'adresse

(43) Date of publication of application: 18.11.2009
(73) Proprietor: Vodafone Holding GmbH, 40213 Düsseldorf (DE)
(72) Inventor: Wilmes, Bettina, 40699 Düsseldorf (DE); Velick, Deborah, 40233 Düsseldorf (DE); Clavin, Neil, 40211 Düsseldorf (DE); Boijens, Willem, 6268 Bemelen (NL); Leon, German, 40219 Düsseldorf (DE)
(74) Representative: Jostarndt Patentanwalts-AG

(56) References cited:
- US-A1- 2004 249 846
- US-A1- 2005 065 980
- US-A1- 2007 150 608
- US-A1- 2007 282 987

## Description

### Technical field

The present invention relates to a method, a device and a communication system for managing address data. In particular the present invention relates to a method, a device and a communication system, wherein the address data relates to positions of contacts.

### Background of the invention

Today there is an increasing number of digital communication devices such as personal digital assistance (PDA), portable computers, mobile telephones, palmtop computers, etc... Sometimes these devices are also equipped with cameras by taking pictures, as well as video and audio recordings. The features and capabilities of the devices lead to an increasing number of data files that may be exchanged between different devices and users by wireless or wired networks. As an example, a mobile telephone is no longer limited for receiving and making voice calls but it may take photographs, receive e-mails and SMS messages and voice messages.

The variety of different kinds of communication increases the number of communication items significantly. This number of communication items is increased even more because one and the same communication item of the above mentioned types is frequently copied to a plurality of recipients. Because of the sheer quantity it becomes consequently more and more difficult for individuals to organize their communication items on a communication device especially if the communication device has only a small screen.

In conventional communication devices such as wireless mobile phones the interfaces for the user to operate the device are usually menu driven. Starting from a top-menu he has to click through a number of sub-menus such as received calls, missed calls, e-mails, SMS-messages, voice messages etc. to check whether he has received new messages. With this conventional kind of interfaces the user has to navigate through a number of menus and sub-menus due to the variety of communication services available and the different types of messages he has received.

US 2004/0249846 A1 discloses a database which is accessible by a wireless information device and is (a) for entities and (b) has attributes which are remotely extensible by an application author using a standard protocol over a network. The database offers, in one implementation, an extensible and dynamic framework, which i.e. is a system that can be updated to include new services and functions, for the fast and efficient design, build and roll-out of client-based applications which involve an element of secure and reliable information distribution or content sharing.

US 2007/0150608 A1 discloses a method of enabling a wireless information device to access data from several data services providers in which the method comprises the step of the device using an extensible framework which handles data passing to and from several applications resident on the device, the framework being shared by each of the applications resident on the device and also being shared by each of the data services providers.

US 2005/0065980 A1 discloses a computer implemented method of processing data containing information about relationships between contacts and a community of contact owners, comprises: collecting data including contact information, contact owner ) information and one or more values related to strength of a relationship between the contact and the contact owner; evaluating the strength of the relationship based on the one or more values; and storing the collected data and evaluated strength in a computer database. A method of keying a database, comprises: building a database of records, each containing information about an entity, and each of which include a domain name field; and setting the domain name field as a key field; whereby a record for an entity is found by reference to a domain name. A method of keying a database, comprises: building a database of records, each containing information about an entity, and each of which include an email address field; and setting the email address field as a key field; whereby a record for an entity is found by reference to an email address. A method of keying a database, comprising: building a database of records, each containing information about an entity, and each of which includes a field holding an identifier uniquely associated with an entity by a convention of computer networking; and setting the field holding the identifier as a key field; whereby a record for an entity is found by reference to an identifier. A method of sharing relationship information, comprising: maintaining a database of relationship information records; selecting contact information according to a selection criterion; and returning selected relationship information also complying with restrictions set in a set of hierarchical privacy policies.

The present invention proposes another approach to improve the operability of mobile communication devices for the user.

### Summary of the invention

It is an object of the current invention, to propose a method and a communication system, ) which allows an adaptation to different preferences of a plurality of users.

The invention includes the method according to claim 1 and the device according to claim 8.

Preferred embodiments of the invention are described in the description and are object of the depending claims 2 to 7.

According to a first aspect, the present invention suggests a method for managing address data. This method is carried out in a way that the address data are stored on a ) people client, wherein the people client contains means for receiving at least a part of the address data, wherein the people client contains a means for checking, if the address data are related to a definable group of contacts and that the people client is capable of making the address data of a first contact available to a second contact in the case that the first contact and the second contact contain to at least one common group.

-The method for managing address data in communication environment comprising a plurality of networks and a plurality of communication devices, wherein the address data relate to contacts comprises the following steps:
a) providing a logical node or the server acting as a client being capable of receiving the address data from a plurality of communication devices and of making the address data available to users based on an evaluation of criteria for transferring the address data;
b) receiving the address data, accumulating the address data and storing the ) address data in the client;
c) performing an evaluation of the address data by means of the client, wherein it is analysed, which contacts are belonging to a definable group,
d) determining by means of the client a first contact belonging to a first definable group and a second contact belonging to a second definable group;
e) performing an evaluation of criteria of the first contact as a sending contact for allowing a communication between the first contact and the second contact as a receiving contact by means of the client;
f) performing an evaluation of criteria of the first contact as a sending contact for allowing a communication between the first contact and the second contact as a
   ) receiving contact by means of the client;
g) performing an evaluation of criteria defined by the second contact for allowing a communication with the first contact by means of the client, and
a) transmitting the address data related to the address of the first contact to the second contact in the case, that the first contact allows the communication with the second contact and that t the second contact allows the communication with the first contact.

The invention proposes to create a client, which is capable of communicating with different applications which handle separate address books and to accumulate these ) address data in a common digital address book. This address book is called in the description of this invention people client.

An embodiment of the invention relates to a method and a system for obtaining address information for a plurality of users and/or exchanging information between a mobile user equipment, e.g. a mobile cellular telephone and a central server. The central server or a logical node in a communication system handles information based on a position of the mobile user equipment.

The invention allows a flexible handling of address data. Address data according to the invention includes any data, which facilitates to direct an information to an intended addressee. Preferably, address data according to the invention allow directing a communication towards the addressee. The address data allow an
efficient handling of communication between a user who intends to send any type of information to the addressee - preferably a further user of a communication system.

Preferred embodiments of the invention relate to an integration of different communication channels for accessing a person.

A preferred embodiment of the invention relates to an integration of different criteria for a transmission of data with regard to a selection of a communication channel. Examples of these communication channels are: telephone calls, voice mails, e-mails, sms and mms.

It is for example possible to define that telephone calls should be received only at limited times wherein for example e-mails could be received at all times.

It is furthermore included in the scope of the invention that the criteria depend on a group of addressee and/or receiver of a communication.

For example it is possible to define colleagues may call a mobile telephone at working hours, but not outside working hours. For other group of contacts and/or for other channels of communication different criteria may be defined.

It is an advantage of preferred embodiments of the invention that the criteria can be defined flexibly.

It is pointed out that embodiments of the invention go far beyond common technologies of allowing access or blocking access.

Preferred embodiments of the invention propose a people client, which is capable of checking, if an intended communication meets criteria of a first contact for a transmission of the address data and of a second contact for receive communications.

This may reduce traffic on a communication network, as known requests for opening a communication channel has to be send to an intended receiving device in the case that the user of the intended receiving device had set preferences which block unwanted communication.

One embodiment of the invention relates to a personal address book, which can be based on one or more data sources.

For example it is included into the scope of the invention, that a database is implemented, wherein address data are stored, which are received and/or accessed from other data sources, as for example Outlook, Flickr database, Facebook, StudiVZ, YouTube, MySpace, Wikipedia, ICQ and ebay.

A preferred embodiment of the invention implements the idea to store - especially on the network - information about preferences of a user for accessing information send from other users and/or preferences about receivers of information related to him. This information is preferably stored within the network.

Alternatively/additionally, it is possible to store this information or at least a part of it at a user equipment, for example a communication device.

A preferred embodiment of the invention allows showing positions of a plurality of persons/locations at the same time.

A preferred embodiment of the invention relates to location based reminders. These reminders are sent to the user of the mobile user equipment and/or somebody else - especially a person belonging to a category predefined for receiving such information user group.

Preferable, the groups are defined by the user.

A preferred embodiment of the invention includes an integration of groups of users. For example it is possible to define special user groups, which are allowed to access certain types of information. A further embodiment of this invention includes that different information is transmitted by different people via specially chosen information channels.

The invention proposes people client with means of transforming different information and/or different types of information in a way that is made available for a selection of a plurality of people.

A further aspect of the invention relates to a noise control. The noise control allows filtering of address information. In an especially preferred embodiment of the invention, the noise control is carried out at a server which supplies address information (pull-technology).

Alternatively it is possible that the mobile user equipment performs the noise control (this is especially suitable for push-technologies).

According to a first embodiment address data of registered users is made available to other registered users.

However, the current invention allows even more complex filtering technologies.

According to a preferred embodiment of the invention a user of a communication device may define criteria about address data which is of interest to him.

According to a further embodiment of the invention, the user equipment which is a second contact within the terminology of claim 1 may act with regard to other contacts - other communication device - as a first contact and may therefore for himself define criteria about other second contacts - communication devices - to which address data should be transmitted.

According to preferred embodiments of the invention the criteria for an access to the address data may vary.

Preferred embodiments of the invention may include a filter respectively a filter mechanism.

Example of filters respectively filter mechanisms which can be used are that a first user and a second user belong to the same group or share at least one common group.

Further filter criteria are individual criteria or certain user groups, as for example colleagues, friends or family members.

It is furthermore evident, that the filter criteria can be adapted by users in order to meet their personal demands.

For example it is possible to enable a visibility/a transmission of address data to colleagues only at working time and to disable such a transfer/availability of address data in other times.

Criteria defined by an object respectively a user for receiving address information from another user and/or for sending address information to another user may be based on preferences. It is for example possible to define criteria for special groups, for example members of white lists, members of black lists, members of group relating to working colleagues, family or friends.

For example it is possible that the user defines a white list of objects to which information about his address should be send.

Alternatively/additionally, the user can define a black list of users which should not obtain the address information.

For those skilled in the art, it is obvious that for unknown users an automatic connection to a certain group can be carried out. For example it is possible to evaluate, if a previously unknown user belongs to a group of working colleagues.

In this case a transfer of address information to this user can be handled according to criteria defined for members of the work group.

A preferred embodiment of the invention relates to a device comprising processing means provided for executing the method according to at least one preferred embodiment of the invention.

According to one embodiment of the device it is a server.

According to a further embodiment of the device it is a logical node.

The logical node may operate in a communication system.

However, implementations, wherein the logical nodes communicate with the contacts outside the communication system to which the user equipments (contacts) are connected are also included in the scope of the invention.

Furthermore embodiments of the invention relate to a communication system, that contains a device comprising processing means provided for executing the method according to the description in this application, preferably with implementation of one or more of the embodiments described herein.

According to a preferred embodiment of the invention the communication system contains a plurality of logical nodes wherein a first logical node contains information about address data related to positions of contacts belonging to a first group of contacts and wherein a second logical node contains address data related to positions of contacts belonging to a second group of contacts.

An interchange of address data between the first logical node and the second logical node is in some embodiments of the invention enabled, in others disabled and in further embodiments of the invention depending on preferences of users of the contacts, especially communication devices.

According to a preferred embodiment of the method, the device and the communication system the method further comprises, the step of transmitting the log-file to the mobile communication device upon request, triggered by a timer and/or permanently.

A preferred embodiment of the invention relates to a device comprising processing means provided for executing the method according to at least one preferred embodiment of the invention.

According to one embodiment of the device according to the invention, it is a server.

According to a further embodiment of the device it is a logical node.

The logical node may operate in a communication system.

However, implementations, wherein the logical node communicates with the objects outside the communication system to which the user equipments (objects) are connected, are also included in the scope of the invention.

Furthermore embodiments of the invention relate to a communication system, that contains a device comprising processing means provided for executing the method according to the description in this application, preferably with implementation of one or more of the embodiments described herein.

According to a preferred embodiment of the invention the communication system contains a plurality of logical node wherein a first logical node contains information about location information related to positions of objects located in a first group and wherein a second logical node contains location information related to positions of objects located in a second group.

An interchange of location information between the first logical node and the second logical node is in some embodiments of the invention enabled, in others disabled and in further embodiments of the invention depending on preferences of users of the objects, especially communication devices.

For those skilled in the art, it is obvious that descriptions regarding to the server may apply to the logical node, respectively the logical node as well.

It is furthermore obvious that also passages relating to the logical node or the logical nodes may relate to the server.

According to a further aspect the present invention suggests a method for managing address data. The method comprises the following steps:
- Receiving address data;
- storing of address data on a server;
- creating a log-file on the server; and
- transmitting the log-file to a mobile communication device.

According to an advantageous embodiment of the invention the method further comprises the step of displaying a graphical representation of the log-file on a screen of the mobile communication device.

Advantageously, the method further comprises the step of extracting the message type from the log-file.

In the preferred embodiment the method further comprises the step of assigning a predetermined symbol for each type of message. In this case the method may further comprise the step of switching the symbol between at least two different states. In this way it is easier for the user to navigate through the log-file.

In a useful embodiment the method further comprises the step of selecting address data from the log-file. Advantageously the method further comprises the step of downloading the selected address data from the server. In this case it is useful if the method further comprises the step of expanding and/or playing back the downloaded address data.

In a practical embodiment the method further comprises, the step of deleting the selected address data from the log-file as well as from the server.

Similarly it is practical if the method further comprises the step of responding to the selected address data. In this case it may be useful if the method further comprises the step of selecting the type of message for responding to the selected message.

In an advantageous embodiment the method further comprises, the step of linking other information stored on the server with the selected address data. This is very useful if the user wants to combine several address data he has already received.

For technical reasons it is advantageous to link documents stored on the server with the selected address data.

For the transmission several approaches have been found to be useful. The method may therefore comprise the step of transmitting the log-file to the mobile communication device upon request, triggered by a timer and/or permanently.

According to a second aspect of the present invention the device is suggested which comprises processing means provided for executing the method according to at least one embodiment of the invention.

According to an advantageous embodiment of the invention the method further comprises the step of displaying a graphical representation of the log-file on a screen of the mobile communication device.

Advantageously, the method further comprises the step of extracting the message type from the log-file.

In the preferred embodiment the method further comprises the step of assigning a predetermined symbol for each type of message. In this case the method may further comprise the step of switching the symbol between at least two different states. In this way it is easier for the user to navigate through the log-file.

In a useful embodiment the method further comprises the step of selecting communication items from the log-file. Advantageously the method further comprises the step of downloading the selected communication item from the server. In this case it is useful if the method further comprises the step of expanding and/or playing back the downloaded communication item.

In a practical embodiment the method further comprises, the step of deleting the selected communication item from the log-file as well as from the server.

Similarly, it is practical if the method further comprises, the step of responding to the selected communication item. In this case it may be useful if the method further comprises the step of selecting the type of message for responding to the selected message.

In an advantageous embodiment the method further comprises, the step of linking other information stored on the server with the selected communication item. This is very useful if the user wants to combine several communication items he has already received.

For technical reasons it is advantageous to link documents stored on the server with the selected communication item.

For the transmission several approaches have been found to be useful. The method may therefore comprise the step of transmitting the log-file to the mobile communication device upon request, triggered by a timer and/or permanently.

### Brief description of the drawings

Figure 1 is a schematic illustration of a communication environment.
Figure 2 is a schematic illustration of a specific aspect of the present invention.
Figure 3 shows a schematic illustration of processes for an exchange of address data according to the invention.
Figure 4 shows an installation, wherein a people client includes an address book.

### Detailed description of the embodiments of the invention

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the spirit and scope of the invention as defined by the following appended claims.

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Certain aspects commensurate in scope with the disclosed embodiments are set forth below.

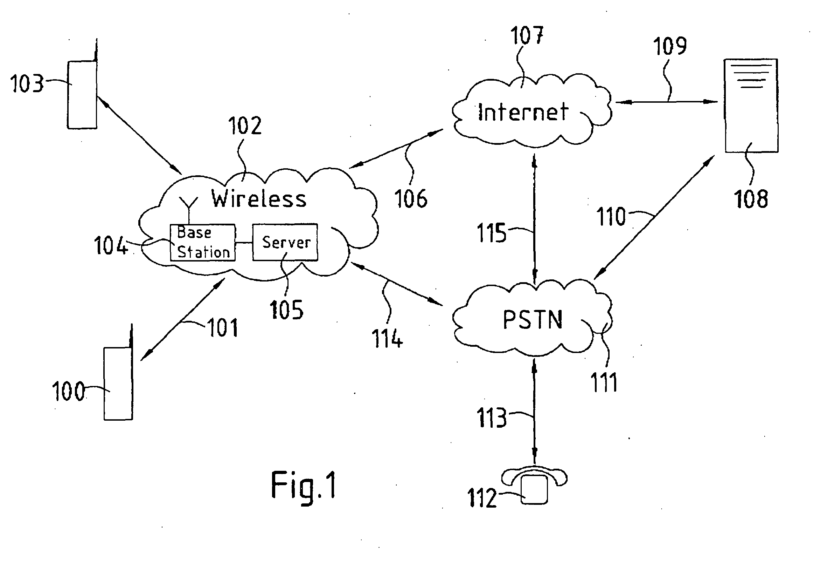

Figure 1 schematically illustrates a communication environment comprising a plurality of networks and devices connected to one or several networks. A communication device 100 of a user is connected via a connection 101 to a wireless network 102. In an exemplary embodiment of the invention, the communication device 100 is a wireless mobile phone. Further wireless communication devices 103 of other users are also connected to the wireless network 102. The wireless network 102 comprises a base station 104 and a server 105. This is conventional technology and not part of the present invention.

The mobile communication device 100 may be cellular phone, a personal digital assistant (PDA) or the like and is registered in a mobile communication network 102. The mobile communication network 102 is e.g. a public land mobile network (PLMN). The mobile communication network 102 e.g, configured according to the GSM standard or the UMTS standard (UMTS; Universal Mobile Telecommunication System) and comprises a circuit switched domain and a packet switched domain. The mobile communication device 100 accesses the PLMN 102 network wirelessly via a radio access network, which may be configured according to a radio access technology known to a person skilled in the art. In an exemplary embodiment of the present invention the radio access network is configured as GERAM (GSMEDGE radio access network) or UTRAM (UMTS terrestrial radio access network).

The wireless network 102 is connected via a high data rate connection 106 with the internet 107. Computer devices 108 are connected by via DSL-connections 109 with the internet 107. For the sake of simplicity only one computer 108 is shown in figure 1. The shown computer device 108 is also provided with a modem to establish a connection 110 with a public switched telephone network (PSTN) 111. Finally, a telephone 112 is connected via a telephone line 113 with the public switched telephone network 111. The communication environment is completed with high data rate connections 114, 115 between the public switched telephone network 111 on the one side and the wireless network 102 and the internet 107 on the other side. As it is illustrated in figure 1 every communication device is interconnected with any other communication device shown in figure 1 providing a large variety of different types of communication between the different devices. In particular different types of messages can be received on the communication device 100 of the user including conventional voice calls, voice messages, e-mails, sms-messages and instant messaging messages. We will refer to the entire group of different types of messages as communication items.

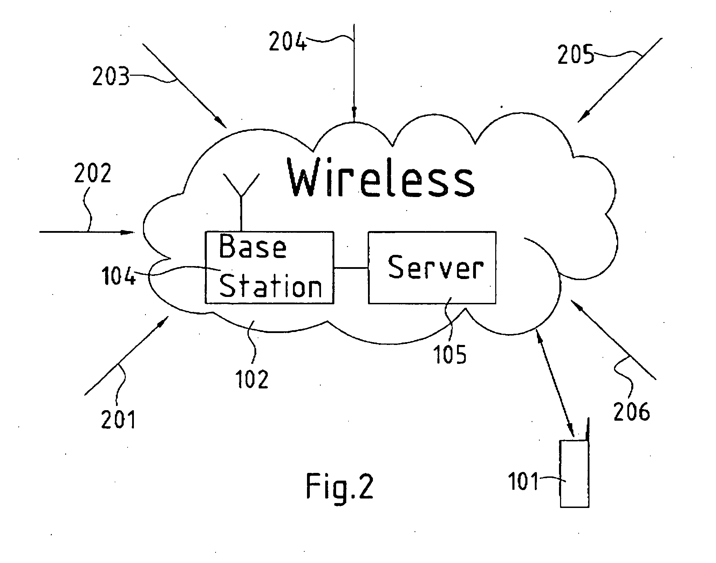

Figure 2 shows a portion of figure 1 emphasizing the fact that different kinds of messages are received by the communication device 100 of the user. The different types of messages are symbolized in figure 1 with arrows 202 to 206. The server 105 of the wireless network provider aggregates information and/or communication items from a plurality of other servers which are connected with the server 105 as mentioned with regard to figure 1,

The term "address data" has a broad meaning in relation to the present invention. On the one hand it includes addresses for sending e-mail, voice, and sms messages and the like but also contacts with other people and web sites of service providers.

In conventional communication devices such as wireless mobile phones the interfaces for the user to operate the device are usually menu driven. Starting from a top-menu he has to click through a number of sub-menus such as received calls, missed calls, e-mails, SMS-messages, voice messages etc. to check whether he has received new messages. This is a cumbersome task especially for busy people who receive many kinds of communication items through different channels. This is for example the case when this person switches on his communication device after a long flight while he may have received a large number of different messages. With this conventional kind of interfaces the user has to navigate through a number of menus and sub-menus due to the variety of communication services available and the different types of messages he has received.

In one embodiment of the present invention it is possible to link documents stored on the server 105 with a communication item. In this way the user has an easy access to documents which are relevant for the communication item.

In one embodiment of the invention communication items are stored on the server 105 of the network provider and only the log file is transmitted to the mobile communication device 100. This is particularly advantageous for mobile devices having limitations with regard to the size of the available memory as well as their energy consumption because storing a link and downloading a file is less energy consuming than downloading a potentially big file associated with the communication item. In particular during travels it is inconvenient for users if their communication device is running out of energy and becomes inoperative. In the same way it is disturbing for a user if his communication device runs out of memory.

At the same time also the security for the user is increased. If his mobile communication device gets lost or damaged all information is still available on the server 105 of the network provider.

If the user who has an allowance to access address data from other users accesses on a map a symbol representing a certain contact, for example a user equipment 103 of another user, he may move a cursor or click on a touch screen to a symbol - for example - an icon and/or photo representing the user - . This command related to the representation/the icon is interpreted from the user equipment of the user who wants to access the information as a select command. The select command triggers a transmission of call-up command from the communication device 100 of the user to the server 105 of the wireless network operator. This call-up command entails the transmission of the selected address data from the server to the mobile communication device. In case of an e-mail message the e-mail becomes visible on a screen of the mobile communication device. In case of a voice message the audio file is transferred from the server to the mobile communication device and the audio file is then played back in the mobile communication device and becomes audible for the user. At the same time the log-file on the server 105 is updated and the updated log-file is transmitted to the mobile communication device 100.

In one embodiment of the present invention it is possible to link documents stored on the server 105 with address data. In this way the user has an easy access to documents which are relevant for the address data.

According to a preferred embodiment of the invention the files of the address data are stored on the server 105 of the network provider and only the log file is transmitted to the mobile communication device 100. This is particularly advantageous for mobile devices having limitations with regard to the size of the available memory as well as their energy consumption because storing a link and downloading a file is less energy consuming than downloading a potentially big file associated with the address data. In particular during travels it is inconvenient for users if their communication device is running out of energy and becomes inoperative. In the same way it is disturbing for a user if his communication device runs out of memory.

At the same time also the security for the user is increased. If his mobile communication device gets lost or damaged all information is still available on the server 105 of the network provider.

However, it is furthermore included within the scope invention to store address data and/or location based information at other places, for example directly at mobile user equipments and/or other contacts capable of utilizing the communication network.

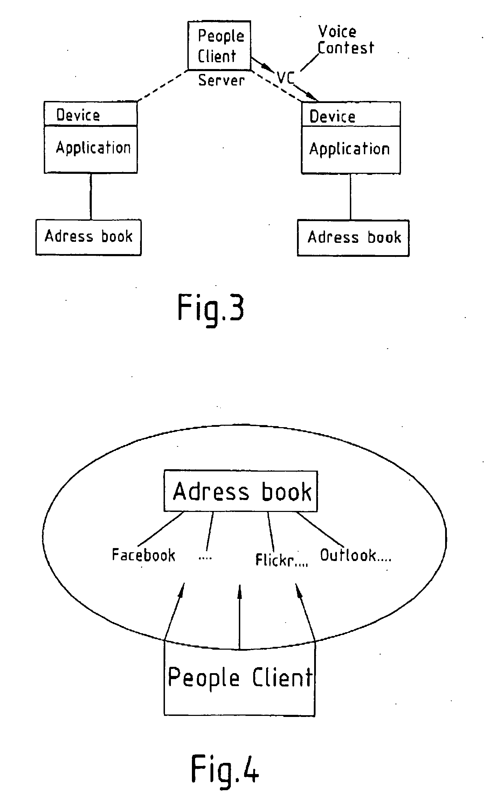

Fig. 3 shows a schematic illustration of processes for an exchange of address data.

A logical node and/or a server which is capable of interacting with a plurality of devices is capable of receiving address data and to transfer the address data. The logical node respectively the server is capable of acting as a people client. The people client is equipped in a way that it is capable of making the address data available to the address data available to users with regard to an evaluation of criteria for transferring the address data.

According to a preferred embodiment people client performs an evaluation of criteria of a sending contact (first contact) relating to conditions of the first contact for a transmission of data to one or more receiving (second) contacts.

The people client may contain address data and/or linking information which allows an access to address data stored in different data sources.

Preferably the people client contains information about data formats which allow an access to address data stored in a data source, for example a computer, a client related to a computer, including a computer program as for example Outlook, databases as Flickr, Facebook, StudiVZ, YouTube, MySpace, Wikipedia, ICQ and ebay.

Fig. 4 shows an installation, where the people client includes an address book. The address book could contain information retrieved from a plurality of data sources.

In some embodiments, the address book could store the data received from the plurality of data sources.

Especially if the address book is installed in a communication network, which allows a fast access of data sources, it is possible to realize an embodiment, wherein the address book contains linking information which allows an access to information stored at the data sources.

This implementation has the advantage that changes of data in one of the data source need only to be transmitted over the network, if the address data are recommended for an access.

The access of the data in the address book may occur as it is previously pointed out according to fig. 3.

The installation according to fig. 3 furthermore includes a preferred embodiment, wherein devices interoperating with the people client may react as a data source and as a receiver of data. In this installation each device has its own address book. This address book can be made available to the people client Alternatively the address book of the device may be stored directly at the people client.

### List of reference numerals:

- 100: communication device
- 101: connection to wireless network
- 102: wireless network
- 103: further wireless communication devices
- 104: base station
- 105: server
- 106: high data rate connection
- 107: internet
- 108: computer devices
- 109: DSL-connections
- 110: connection
- 111: public switched telephone network
- 112: telephone
- 113: telephone line
- 114: data rate connection
- 115: data rate connection
- 201: arrow representing a type of communication
- 202: arrow representing a type of communication
- 203: arrow representing a type of communication
- 204: arrow representing a type of communication
- 205: arrow representing a type of communication
- 206: arrow representing a type of communication
- 310: communication device
- 320: communication device
- 330: communication device
- 340: logical node
- 350: logical node
- 360: communication device
- 370: communication device
- 380: communication device

## Claims

1. A method for managing address data in communication environment comprising a plurality of networks (102, 107, 11) and a plurality of communication devices (100, 103, 108, 112), wherein the address data relate to contacts, comprising the following steps:
a) providing a logical node or the server (105) acting as a people client being capable of receiving the address data from a plurality of communication devices (100, 103, 108, 112) and of making the address data available to users based on an evaluation of criteria for transferring the address data;
b) receiving the address data, accumulating the address data and storing the address data in the client (105);
c) performing an evaluation of the address data by means of the client, wherein it is evaluated, which contacts are belonging to a definable group;
d) determining by means of the client a first contact belonging to a first definable group and a second contact belonging to a second definable group;
e) performing an evaluation of criteria of the first contact as a sending contact for allowing a communication between the first contact and the second contact as a receiving contact by means of the client;
f) performing an evaluation of criteria defined by the second contact for allowing the communication with the first contact by means of the client; and
g) transmitting address data related to the first contact to the second contact in the case, that the first contact allows the communication with the second contact and that the second contact allows the communication with the first contact.

2. The method according to any of the preceding claims, wherein the steps c, d, e, f and g are carried out for a plurality of contacts.

3. The method according to any of the preceding claims,
**characterized in,**
**that** it is evaluated by means of the client, if the second contact is belonging to a common group with the first contact.

4. The method according to claim 3,
**characterized in,**
**that** the first contact is enabled by means of the client to influence a decision about agreeing to the transmission of the address data to the second contact depending on the evaluation, if the second contact is belonging to the common group.

5. The method according to claim 3,
**characterized in,**
**that** the transmission of the address data to the second contact is enabled by means of the client if the second contact is belonging to the common group.

6. The method according to claim 3,
**characterized in,**
**that** the transmission of the address data to the second contact is disabled by means of he client if the second contact is not belonging to the common group.

7. Method according to any of the preceding claims,
**characterized in,**
**that** the method further comprises, the step of transmitting by means of the client a log-file to the mobile communication device (100) upon request, triggered by a timer and/or permanently.

8. Device comprising processing means provided for executing the method according to any of the preceding claims, wherein the device is a server (105) or a logical node (340, 350).

## Patentansprüche

1. Verfahren zum Verwalten von Adressendaten in einer Kommunikationsumgebung, die mehrere Netze (102, 107, 11) und mehrere Kommunikationsvorrichtungen (100, 103, 108, 112) umfasst, wobei sich die Adressendaten auf Kontakte beziehen, wobei das Verfahren die folgenden Schritte umfasst:
a) Bereitstellen eines logischen Knotens oder des Servers (105), der als ein Client wirkt, der die Adressendaten von mehreren Kommunikationsvorrichtungen (100, 103, 108, 112) empfangen kann und der die Adressendaten auf der Grundlage einer Auswertung von Kriterien zur Übertragung der Adressendaten für Nutzer verfügbar machen kann;
b) Empfangen der Adressendaten, Ansammeln der Adressendaten und Speichern der Adressendaten in dem Client (105);
c) Ausführen einer Auswertung der Adressendaten mittels des Clients, wobei ausgewertet wird, welche Kontakte zu einer definierbaren Gruppe gehören;
d) Bestimmen eines ersten Kontakts, der zu einer ersten definierbaren Gruppe gehört, und eines zweiten Kontakts, der zu einer zweiten definierbaren Gruppe gehört, mittels des Clients;
e) Ausführen einer Auswertung von Kriterien des ersten Kontakts als ein sendender Kontakt, um eine Kommunikation zwischen dem ersten Kontakt und dem zweiten Kontakt als einem empfangenden Kontakt zu ermöglichen, mittels des Clients;
f) Ausführen einer Auswertung von durch den zweiten Kontakt definierten Kriterien, um die Kommunikation mit dem ersten Kontakt zu ermöglichen, mittels des Clients; und
g) Senden von Adressendaten, die sich auf den ersten Kontakt beziehen, an den zweiten Kontakt, falls der erste Kontakt die Kommunikation mit dem zweiten Kontakt zulässt und falls der zweite Kontakt die Kommunikation mit dem ersten Kontakt zulässt.

2. Verfahren nach einem der vorhergehenden Ansprüche, wobei die Schritte c, d, e, f und g für mehrere Kontakte ausgeführt werden.

3. Verfahren nach einem der vorhergehenden Ansprüche, **dadurch gekennzeichnet, dass** mittels des Clients ausgewertet wird, ob der zweite Kontakt zu einer gemeinsamen Gruppe mit dem ersten Kontakt gehört.

4. Verfahren nach Anspruch 3, **dadurch gekennzeichnet, dass** der erste Kontakt mittels des Clients freigegeben wird, um in Abhängigkeit von der Auswertung eine Entscheidung über die Zustimmung zu der Sendung der Daten an den zweiten Kontakt zu beeinflussen, falls der zweite Kontakt zu der gemeinsamen Gruppe gehört.

5. Verfahren nach Anspruch 3, **dadurch gekennzeichnet, dass** die Sendung der Adressendaten an den zweiten Kontakt mittels des Clients freigegeben wird, falls der zweite Client zu der gemeinsamen Gruppe gehört.

6. Verfahren nach Anspruch 3, **dadurch gekennzeichnet, dass** die Sendung der Adressendaten an den zweiten Kontakt mittels des Clients gesperrt wird, falls der zweite Kontakt nicht zu der gemeinsamen Gruppe gehört.

7. Verfahren nach einem der vorhergehenden Ansprüche, **dadurch gekennzeichnet, dass** das Verfahren ferner den Schritt des Sendens einer Protokolldatei an die Mobilkommunikationsvorrichtung (100) mittels des Clients auf Anforderung, ausgelöst durch einen Zeitgeber und/oder dauerhaft umfasst.

8. Vorrichtung, die Verarbeitungsmittel umfasst, die zum Ausführen des Verfahrens nach einem der vorhergehenden Ansprüche vorgesehen sind, wobei die Vorrichtung ein Server (105) oder ein logischer Knoten (340, 350) ist.

## Revendications

1. Procédé de gestion de données d'adresse en environnement de communication comprenant une pluralité de réseaux (102, 107, 11) et une pluralité de dispositifs de communication (100, 103, 108, 112), dans lequel les données d'adresse concernent des contacts, comprenant les étapes suivantes :
a) fournir un noeud logique ou le serveur (105) agissant en tant que client capable de recevoir les données d'adresse à partir d'une pluralité de dispositifs de communication (100, 103, 108, 112) et de rendre les données d'adresse disponibles aux utilisateurs en se basant sur une évaluation de critères pour transférer les données d'adresse ;
b) recevoir les données d'adresse, accumuler les données d'adresse et conserver en mémoire les données d'adresse dans le client (105) ;
c) effectuer une évaluation des données d'adresse au moyen du client, dans laquelle il est évalué quels contacts appartiennent à un groupe pouvant être défini ;
d) déterminer au moyen du client, un premier contact appartenant à un premier groupe pouvant être défini et un second contact appartenant à un second groupe pouvant être défini ;
e) effectuer une évaluation de critères du premier contact en tant que contact d'envoi pour permettre une communication entre le premier contact et le second contact en tant que contact receveur au moyen du client ;
f) effectuer une évaluation de critères définis par le second contact pour permettre la communication avec le premier contact au moyen du client ; et
g) transmettre les données d'adresse liées au premier contact au second contact dans le cas où le premier contact permet la communication avec le second contact et que le second contact permet la communication avec le premier contact.

2. Procédé selon la revendication 1 ou 2, dans lequel les étapes c, d, e, f et g sont effectuées pour une pluralité de contacts.

3. Procédé selon l'une quelconque des revendications précédentes, dans lequel il est évalué, au moyen du client, si le second contact appartient à un groupe commun avec le premier contact.

4. Procédé selon la revendication 3, **caractérisé en ce que** le premier contact est activé au moyen du client pour influencer une décision sur l'acceptation de la transmission des données d'adresse au second contact en fonction de l'évaluation, si le second contact appartient au groupe commun.

5. Procédé selon la revendication 3, **caractérisé en ce que** la transmission des données d'adresse au second contact est activée au moyen du client si le second contact appartient au groupe commun.

6. Procédé selon la revendication 3, **caractérisé en ce que** la transmission des données d'adresse au second contact est désactivée au moyen du client si le second contact n'appartient pas au groupe commun.

7. Procédé selon l'une quelconque des revendications précédentes, **caractérisé en ce que** le procédé comprend en outre l'étape de transmettre, au moyen du client, un fichier-journal au dispositif de communication mobile (100) sur demande, déclenchée par une horloge et/ou de façon permanente.

8. Dispositif comprenant un moyen de traitement fourni pour exécuter le procédé selon l'une quelconque des revendications précédentes, dans lequel le dispositif est un serveur (105) ou un noeud logique (340, 350).
